(19) Europäisches Patentamt
European Patent Office
Office européen des brevets

(11) **EP 2 200 170 A1**

(12) **EUROPEAN PATENT APPLICATION**

(43) Date of publication:
**23.06.2010 Bulletin 2010/25**

(51) Int Cl.:
**H02P 3/22** (2006.01)          **H02P 9/08** (2006.01)
**F03B 13/08** (2006.01)

(21) Application number: **08022105.4**

(22) Date of filing: **19.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **OpenHydro IP Limited
Dublin 2 (IE)**

(72) Inventors:
• **Ives, James
Dublin 2 (IE)**

• **Taafe, David
Dublin 2 (IE)**
• **Dunne, Paul
Drumcondra
Dublin 9 (IE)**

(74) Representative: **Hussey, Paul Anthony et al
27 Clyde Road
Ballsbridge
Dublin 4 (IE)**

(54) **A system for braking and isolation of a hydroelectric turbine generator**

(57) An electrical braking system is described for use in an off-shore hydroelectric turbine generator. The braking system is operable to apply a short circuit across a portion of the coils in the generator, which results in an electrical load applied to the generator, causing a braking torque to act against the turbine torque produced by the motion of the rotor. As the generator is of a shaftless construction, there is no damage caused to the generator through the application of the short circuit. It is also described how the braking system may be controlled either locally or remotely, and how the system may act as part of a fault protection system.

Fig. 3

Printed by Jouve, 75001 PARIS (FR)

## Description

### Field of the Invention

The present invention relates to a system for the braking and isolation of a hydroelectric turbine generator, in particular to an electrical braking system for a direct-drive shaftless permanent magnet generator.

### Background of the Invention

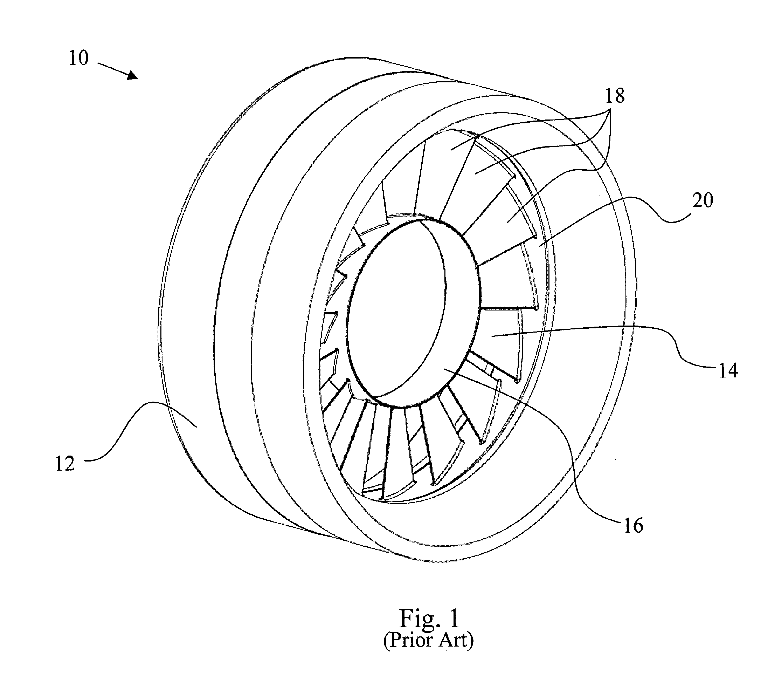

With reference to Fig. 1, a direct-drive shaftless permanent magnet hydroelectric turbine generator is described in PCT Application No. PCT/EP2007/006258. The generator 10 comprises a ring-shaped stator 12 and a rotor 14, the stator 12 having a plurality of coils (not shown) located about the circumference of the stator 12. The rotor 14 comprises an inner rim 16, which defines an open centre. The rotor 14 further comprises an array of generally radially extending blades 18 captured between the inner rim 16 and an outer rim 20. The rotor 14 further comprises an array of magnets (not shown) disposed about the outer rim 20. The stator 12 concentrically surrounds the rotor 14, with the plurality of coils providing a magnetic flux return path for the magnets.

The generator 10 is positioned in an area of tidal flow, such that the motion of the seawater through the generator 10 acts on the blades 18, resulting in rotation of the rotor 14 within the stator 12. The motion of the magnets relative to the coils of the stator 12 causes the magnetic field generated by the magnets to induce an EMF in each of the coils. These induced EMFs provide the electrical power output from the turbine generator 10.

In the case of a detected fault, or for maintenance purposes, it is often desirable to prevent rotation of the rotor 14 and to immobilise the device. It is known to employ physical frictional brakes to the rotor 14, in order to stop movement of the rotor 14. Often, such brakes will be actuated by control circuitry housed at the generator location, communicatively linked with an on-shore control station.

However, such frictional brakes can deteriorate due to wear and tear, and often require onsite replacement. Additionally, locally-based control circuitry often requires detailed inspection and maintenance, to ensure reliable operation. In the case of an off-shore hydroelectric turbine generator, such maintenance operations often require the raising of the generator from its installed location, which may occur during relatively rough sea conditions. These maintenance operations require considerable effort and expense, and can result in a particular turbine generator being offline from the grid for a not inconsiderable amount of time, while maintenance is completed.

Therefore, it is an object of the invention to provide a braking system for a hydroelectric turbine generator which allows for reliable operation with minimum maintenance.

## Summary of the Invention

Accordingly, there is provided an electrical braking system for an off-shore hydroelectric turbine generator, the turbine generator comprising a direct-drive shaftless permanent magnet generator having a plurality of conductive coils and a plurality of magnets, the permanent magnet generator allowing for relative motion between said plurality of coils and said plurality of magnets, inducing an electromotive force in said plurality of coils, wherein
the electrical braking system, responsive to a control signal, is operable to apply a short circuit across at least one of said plurality of coils, such that a current is induced in said at least one coil and an electrical load is applied to said permanent magnet generator, resulting in a braking torque being applied to the hydroelectric turbine generator.

The application of a short circuit across some of the coils in the generator provides for very fast electrical braking of the turbine, allowing the brake to be used in an emergency situation and for protection purposes. The shaftless design of the generator and the cooling action of the coils by the surrounding seawater allows for a direct powerful short circuit to be deliberately applied, with minimal possibility of damage. In addition, the configuration of the system removes the need for additional switchgear and/or isolation equipment in the sub sea location.

Preferably, at least one of the plurality of conductive coils of the permanent magnet generator is formed by a conductor comprising a plurality of parallel wires, and wherein
the electrical braking system is operable to apply said short circuit across at least one of said plurality of parallel wires.

The resistance presented to the current passing through the braking system is dependent on the number of wires shorted. Accordingly, the retardation torque characteristic can be chosen to always exceed the turbine torque, to ensure that the electrical braking system will apply the braking action to the generator immediately on activation.

Preferably, the number of said plurality of wires across which said short circuit is applied is chosen such that the braking torque generated by said permanent magnet generator exceeds the turbine torque of the turbine generator.

Preferably, the electrical braking system comprises a contactor adapted to be connected across the output terminals of an off-shore hydroelectric turbine generator, and wherein said contactor is controlled by a control signal.

The use of a contactor having a control signal to ensure "always on" operation ensures that if any interruption occurs to the control signal, e.g. during transmission, the braking action will be applied by shorting the output terminals of the turbine. Additionally, this arrangement allows for isolation and earthing of the turbine during installation.

Preferably, the electrical braking system comprises an electrical switching device and an actuator circuit to actuate said electrical switching device, wherein said actuator circuit is controlled by a control signal.

The electrical switching device may comprise an electronic switching device, or an electromechanical switching device.

Preferably, the electrical braking system comprises a rectifier circuit, said electrical switching device being located across the rectified output of the rectifier circuit, wherein the input of the rectifier circuit is adapted to be connected across the terminals of at least one of said plurality of conductive coils.

Preferably, said electrical switching device comprises a TRIAC. Alternatively, said electrical switching device is chosen from one of the following: a transistor; or a thyristor.

The simplicity of the design of the electrical braking system of the invention ensures that the system can be constructed from simple, reliable components, requiring minimal maintenance.

Preferably, said actuator circuit comprises a reed relay having a coil, the coil of the reed relay connected to said control signal, wherein said actuator circuit is operable to actuate said electrical switching device if supply to said coil is removed.

The use of such a reed relay construction allows for high voltage isolation between the coil circuit and the contact circuit.

There is also provided a hydroelectric generator system having fault isolation, the system comprising:

at least one off-shore hydroelectric turbine generator comprising a direct-drive shaftless permanent magnet generator having a plurality of conductive coils and a plurality of magnets, the permanent magnet generator allowing for relative motion between said plurality of coils and said plurality of magnets, inducing an electromotive force in said plurality of coils, the off-shore hydroelectric turbine generator further comprising an electrical braking system as claimed in any preceding claim; and
a power cable adapted to connect the output of said at least one off-shore hydroelectric turbine generator with an on-shore power substation; wherein the system further comprises at least one control wire, said control wire embedded in said power cable, said control wire adapted to transmit a control signal from said on-shore power substation to the electrical braking system of said at least one off-shore hydroelectric turbine generator, wherein said control signal is operable to actuate said electrical braking system to apply an electrical brake to said off-shore hydroelectric turbine generator.

The use of a control wire between the substation and the generator allows for the remote control of the generator electrical braking systems. Also, as the control wire is embedded in the power cable connecting the generator with an on-shore substation, this provides for the application of emergency brakes to the generator if a fault occurs at some point along the power cable.

Preferably, the off-shore hydroelectric turbine generator further comprises a power line transmission module, said power line transmission module operable to impress a modulated carrier signal on said at least one control wire, for transmission of data to said on-shore power substation.

The provision of the transmission module allows for the control wire (used to operate the electrical braking system) to be used to transmit information from the generator back to an on-shore power substation. This removes the need for additional signalling technology or transmission lines from the off-shore generator to the on-shore substation.

Preferably, the power line transmission module is operable to impress a low-frequency AC signal derived from at least one of said plurality of conductive coils onto said at least one control wire, said low-frequency AC signal representative of the RPM of the turbine generator.

This allows for the RPM (Revolutions Per Minute) of an individual turbine generator to be easily monitored. The RPM of a turbine can provide an indication as to the existence of a fault at the turbine.

Preferably, the system comprises an array of a plurality of said off-shore hydroelectric turbine generators and a plurality of control wires, and wherein the electrical braking system of each off-shore hydroelectric turbine generator is coupled with a dedicated control wire of said plurality of control wires, wherein the hydroelectric generator system is operable to apply an electrical brake to a subset of said plurality of off-shore hydroelectric turbine generators.

As each turbine generator has a dedicated control wire, this allows for the selective braking of an individual turbine or a subset of turbines in an array, e.g. if it is desired to take a particular turbine off-line for maintenance purposes.

Preferably, said at least one control wire is implemented as a single-wire earth return circuit, wherein seawater at said off-shore hydroelectric turbine generator is used as a return path for current.

The use of a single-wire earth return circuit means that only a single control wire is needed for the braking system. Also, loop resistance is reduced.

Preferably, the system further comprises a secondary switching element, the secondary switching element located at an on-shore substation, wherein the secondary switching element is operable to apply a short circuit across the output of the power cable, wherein the resistance of the power cable acts as a braking resistor, and wherein a current is induced in said plurality of conductive coils and an electrical load is applied to said permanent magnet generator, resulting in a braking torque being applied to the hydroelectric turbine generator.

The implementation of the secondary switching element allows for a braking operation to be remotely enacted without sending any control signals off-shore.

**Detailed Description of the Invention**

Embodiments of the invention will now be described, by way of example only, with reference to the accompanying drawings, in which:

> Fig. 1 shows a known shaftless hydroelectric turbine generator;
> Fig. 2 shows a representation of the torque forces present during a braking operation;
> Fig. 3 shows the electric braking system according to the invention as implemented in a hydroelectric turbine generator;
> Fig. 4 is a graph showing the braking characteristic of a sample implementation of the system of Fig. 3;
> Fig. 5 is an alternate implementation of the electric braking system of Fig. 3;
> Fig. 6 is a graph showing the braking characteristic of a sample implementation of the system of Fig. 5;
> Fig. 7 is a representative circuit diagram of the system of the invention once a braking operation is applied;
> Fig. 8 is a cross-section of a power cable having an embedded control wire, according to the invention; and
> Fig. 9 is a representative circuit diagram of a control circuit for the electrical braking system of the invention.

The invention provides for an electrical braking system to be used in a hydroelectric turbine generator. Electrical braking involves applying an electrical load to the generator that causes the generator torque to exceed the torque produced by the turbine at the prevailing tidal flow. The rate of deceleration is determined by the difference in torque and the moment of inertia of the rotor and the entrained water.

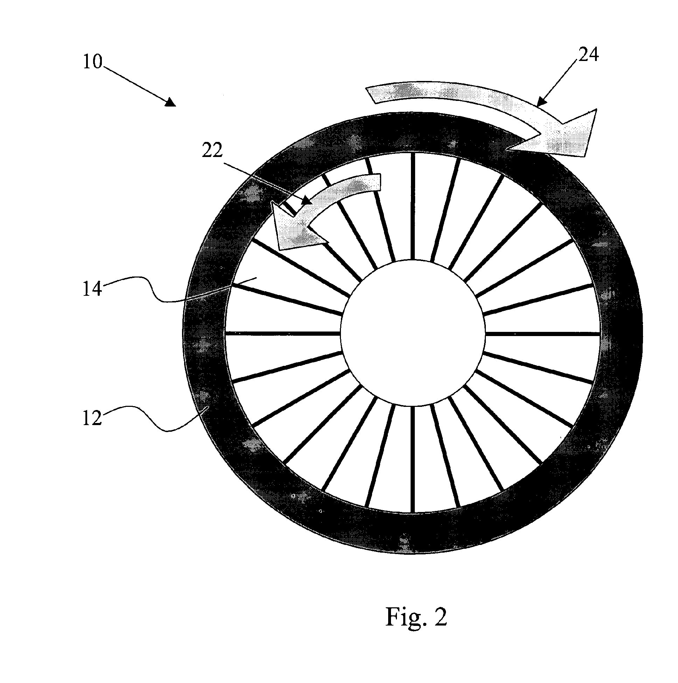

As the generator 10 has a shaftless construction, the use of an electrical braking system will not result in damage to drive train components. As a result, with reference to Fig. 2, the outer ring of the rotor 14 is subjected the two distinct torques as shown - the turbine torque 22 and the generator torque 24. The risk of damage to the components is related to the shear stress generated by the applied torques 22,24.

The turbine torque 22 is the same as occurs under normal operation of the generator 10, due to the motion of the rotor 14 within the stator 12 housing, and which the generator 10 is designed to carry. The generator torque 24 is created during the braking operation, when an electrical load is applied to the generator 10, which results in the generation of a generator retarding torque 24 that acts against the turbine torque 22. As long as the generator torque 24 is greater than the turbine torque 22, the rotor 14 will slow down to a very low speed.

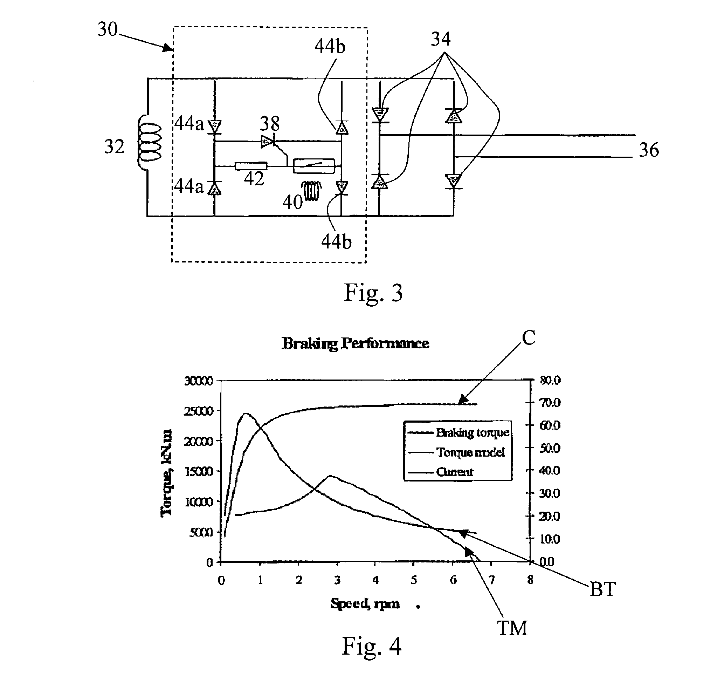

With reference to Fig. 3, an embodiment of an electrical braking system according to the invention is indicated in dashed outline at 30. The electrical braking system 30 is provided across the terminals of a coil 32, which is located in the stator 12 of a hydroelectric turbine generator 10. Four diodes 34 are arranged in a rectifier bridge configuration across the terminals of the coil 32, providing for conversion of the AC output wave from the coil 32 into a DC output at output terminal 36, for transmission.

The electrical braking system 30 shown in Fig. 3 comprises a thyristor 38 connected in parallel with a reed relay 40 and a relay resistor 42, the reed relay 40 connected across the Gate-Cathode terminal of the thyristor 38, the relay resistor connected across the Anode-Gate terminal. A series of diodes 44a,44b are provided in the electrical braking system 30 in a rectified arrangement, to allow for a rectified voltage to be provided across the Anode-Cathode terminal of the thyristor 38 during both positive and negative half-cycles of the induced EMF in the coil 32.

A reed relay is chosen, as such a relay provides high voltage isolation between the relay coil circuit and the contact or switch circuit.

A control signal is provided to the coil of the reed relay 40 such that, during normal operation of the turbine generator 10, a current in the coil of the reed relay 40 maintains the contained reed switch in a closed state. As the reed switch is closed, this shorts the Gate voltage of the thyristor 38 to the diodes 44b, and sustains the Gate voltage at the same potential as the Cathode voltage, maintaining the thyristor 38 in an "off" state, and preventing conduction through the thyristor 38. The generator 10 operates as normal, with the voltage generated across the terminals of the coil 32 rectified by diodes 34, and output via terminal 36.

Once a braking operation is desired, supply is cut to the coil of the reed relay 40. As a result, the contained reed switch is opened, and a positive voltage potential is provided at the Gate terminal of the thyristor 38 with respect to the Cathode. The positive voltage at the Gate switches the thyristor 38 into the "on" state, allowing for conduction from the Anode terminal to the Cathode terminal.

As the thyristor 38 is "on", this presents a short circuit across the thyristor terminals, which is presented as a short across the terminals of the coil 32. As a result of the short circuit, the coil 32 carries current, which develops electrical power in the resistance of the coil 32. Accordingly, the generator 10 produces a corresponding retarding torque 24, which acts against the turbine torque 22.

With reference to Fig. 4, the braking performance is illustrated for a sample hydroelectric turbine generator configuration. The graph is generated for a 5MW turbine delivering power 5km to shore through a 2kA, 50kV cable. The turbine has a shaftless permanent magnet generator, comprising 288 coils each with 313 turns of conductor, the conductor comprising 6 parallel wires each 1mm in diameter. The coil develops an EMF of 1060V$_{rms}$ at a frequency of 14Hz when the turbine rotates at 4rpm. The coil resistance is 2.3Ω and inductance is 180mH.

Fig. 4 shows how the total retardation torque due to the full set of 288 coils varies with the rotational speed, i.e. where the electrical braking system 30 is operable to apply a short circuit across each of the coils 32 in the generator 10. The graph of Fig. 4 shows the coil current, C; the braking torque (or generator torque), BT; and the turbine torque produced by the generator as a function of speed, when the velocity of the tidal flow is at its maximum rated value (the torque model), TM.

At low speeds the coil current C is limited principally by the resistance of the coil 32. At higher speeds the higher frequency leads to increased reactive impedance due to coil inductance, and as a result the braking torque BT at high speeds reduces with increasing speed. From the graph, it is apparent that under some conditions the turbine torque TM exceeds the braking torque BT of the electrical braking system 30, and the turbine will accelerate to approximately 5.5rpm in the system illustrated.

However, if the turbine is allowed to rotate for a period of time, the relatively high short-circuit current will raise the temperature of the coil windings, and as a result the coil resistance will increase. Once this happens, the braking torque will increase to a point where the braking torque exceeds the turbine torque, and the turbine will be brought to a low speed.

In general, the presence of the surrounding seawater helps to prevent the overheating of the coil windings. However, if it is desired to provide a braking system that ensures that the coils 32 do not overheat, this can be achieved through an alternative arrangement of the electrical braking system 30.

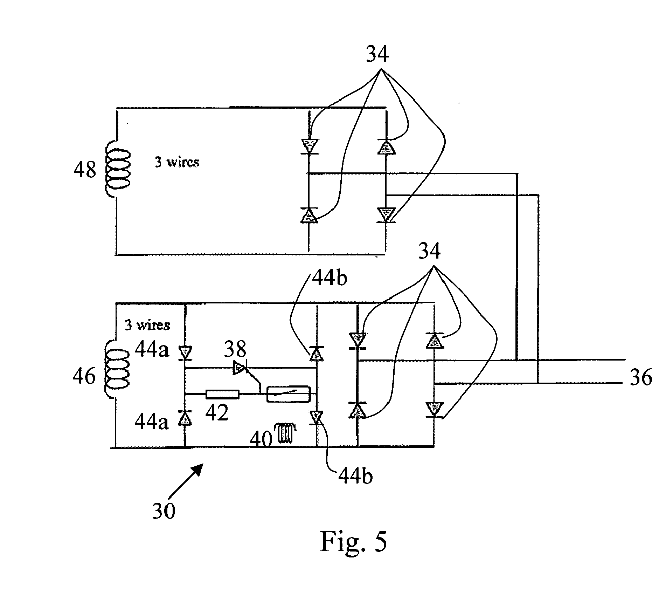

With reference to Fig. 5 of the accompanying drawings, an alternate braking arrangement is shown. Here, the electrical braking system 30 is provided across a subset 46 of the wires in the conductor of the coil 32, with the remainder of the wires 48 of the coil conductor connected to the output terminal 36 via a rectifier bridge. In the example shown, the electrical braking system 30 is connected to 3 of the 6 wires in the conductor. As a result, due to the reduced conductive area, the resistance presented to the current passing through the electrical braking system 30 is doubled.

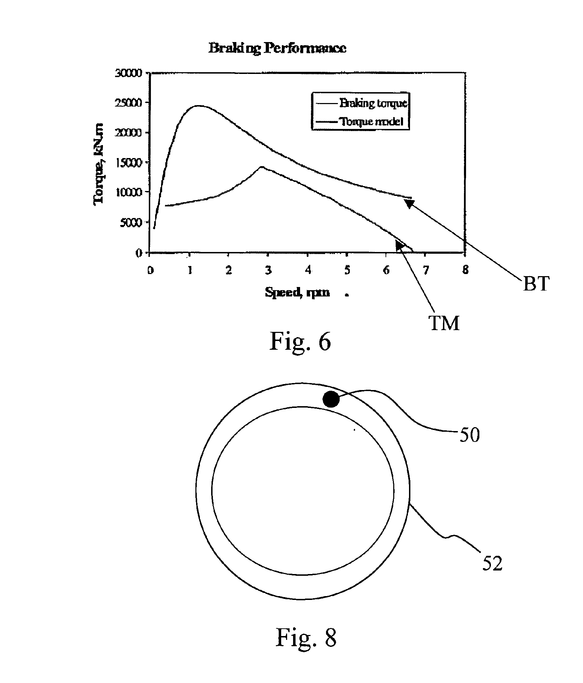

Fig. 6 shows the braking performance for the turbine generator having the characteristics described above, when the electrical braking system 30 is connected as shown in Fig. 5. It is apparent that the generator braking torque BT has increased, and the turbine torque TM does not exceed the generator torque BT at any point. In this case, the turbine would slow down immediately as the braking operation is performed. However, the equilibrium speed for the short circuit state would be approximately 0.2rpm, as opposed to 0.1rpm in the case where the entire windings of the coil 32 are shorted.

The combination of the shaftless design of the generator 10 and the cooling action of the coils 32 provided by the seawater allows for a direct powerful short circuit to be applied to the generator 10 without fear of damage. The system provides for very fast electrical braking of the turbine, allowing the brake to be used in emergency situations and for protection purposes. In addition, as remote-access control of the turbine generator is provided, this removes the need for additional switchgear and isolation equipment to be located at the generator's installation site.

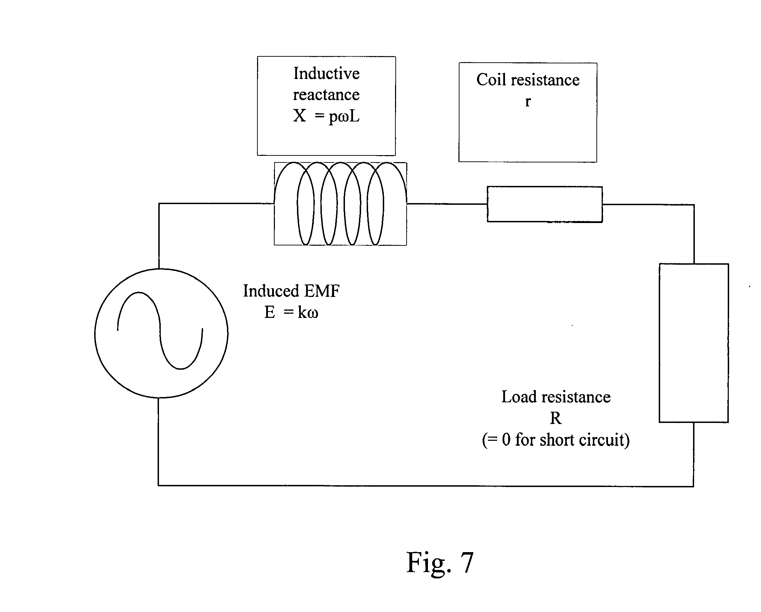

With reference to Fig. 7, the generator torque is associated with the power developed within an applied load such as a braking resistor plus the internal losses in the machine. If a short circuit is applied then it is only the internal losses that apply.

If the machine is rotating at angular speed ω, then each coil has an induced EMF with electrical angular frequency pω and rms voltage kω.

The generator torque is calculated as follows using the equivalent circuit for a typical winding coil. The braking resistance shown is equal to the ohmic value of a real resistor applied to the entire generator multiplied by the number coils connected in parallel; in this way the effect of the braking resistor on a typical coil is reproduced.

The total impedance is

$$|Z| = \sqrt{(r+R)^2 + X^2}$$

The current is

$$I = \frac{E}{Z} = \frac{k\omega}{\sqrt{(r+R)^2 + (p\omega L)^2}}$$

The power loss in the circuit is

$$P = I^2(r+R) = \frac{k^2\omega^2(r+R)}{(r+R)^2 + (p\omega L)^2}$$

The power is equal to the product of the speed and the electrical torque. For a total of N coils, the total electrical torque is:

$$T_{elec} = \frac{Nk^2\omega(r+R)}{(r+R)^2 + (p\omega L)^2}$$

While it will be understood that the control signal can be provided locally, in a preferable embodiment the current of the control signal is provided through a control wire from a remote location, i.e. an on-shore substation. With reference to Fig. 8, the control wire 50 is preferably embedded in the power cable 52 that connects the off-shore hydroelectric turbine generator with the on-shore power substation. As a result, if a fault or a break develops in the power cable 52, the control wire 50 is also broken. Therefore, the electrical braking system 30 is activated as a fail-safe feature in the event of a fault in the power cable 52.

It will be understood that the control wire 50 may be located towards the outer layers of the power cable 52, so that any damage to the cable 52 breaks the control circuit and therefore applies the electrical brake, before the main power conductors are affected.

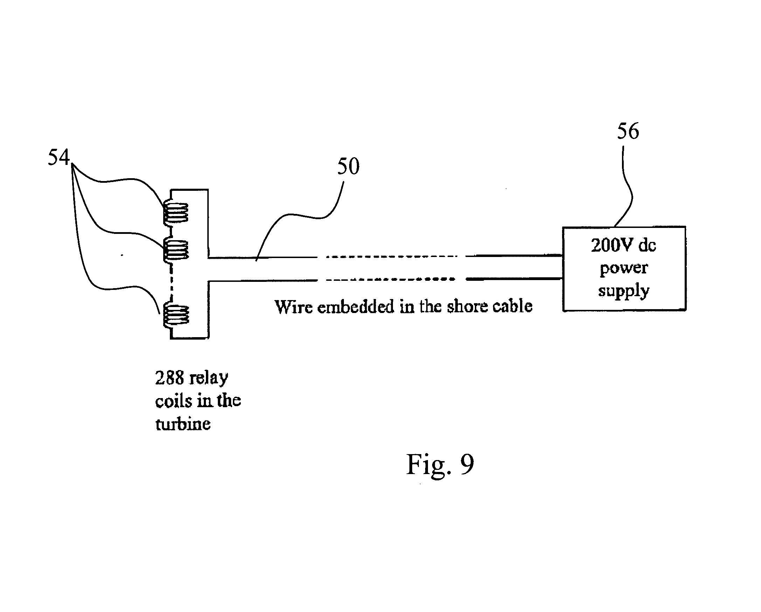

A sample connection diagram for the control circuit of the electrical braking system 30 is shown in Fig. 9. Here, the reed relay coils 54 located at the turbine generator 10 are connected in series, and supplied with the control signal transmitted from the on-shore substation 56 through the control wire 50 embedded in the power cable 52. Once the supply to the coils 54 is cut (either through a fault in the cable 52 or the removal of the on-shore supply due to a braking requirement), a short circuit is applied across the terminals of each of the coils 32 of the stator 12. The corresponding braking torque that is generated causes the braking of the turbine.

A sample configuration comprises a coil circuit comprising 288 coils connected in series, each coil having 320 turns of 0.45 diameter wire having a resistance of $1.6\Omega$. The set of 288 relay coils is supplied with a current of 320mA from a DC power source at the on-shore substation. The conductors between the on-shore station and the turbine generator are 1mm² cross-section, and for a power cable length of 5km, the resistance of each of the control wires is $85\Omega$. The complete circuit resistance is $635\Omega$, and the voltage required to drive the current through the circuit is 200V.

While the circuit of Fig. 9 shows a requirement for two control wires 50 to complete the control circuit, it will be understood that the control circuit may be implemented as a single-wire earth return circuit, wherein the seawater present at the off-shore hydroelectric turbine generator is used as a return path for current. This configuration means that only a single control wire is needed for the braking system, which reduces cost and complexity of the power cable 52 used. Alternatively, the second control wire that would have been used as the return path for the circuit may now be used as a control wire for a second turbine generator.

The provision of the control wire 50, connecting the turbine generator 10 with an on-shore-substation, provides for a possible communications channel for the transmission of data from the turbine generator 10 back to the on-shore station. For example, the off-shore hydroelectric turbine generator 10 may further comprises a power line transmission module, the power line transmission module operable to impress a modulated carrier signal on the control wire 50, for transmission of data to the on-shore power substation. This removes the need for additional signalling technology or transmission lines from the off-shore generator 10 to the on-shore substation.

In one example, the power line transmission module may be operable to impress a low-frequency AC signal derived from a conductive coil on the stator 12 onto the control wire 52, wherein the low-frequency AC signal is representative of the RPM of the turbine generator 10. Furthermore, a coil on the generator 10 may be isolated from the remainder of the coils 32, with the isolated coil connected between earth and the control wire 50. This minimises the use of control wires 50 for a single turbine, allowing for the other control wires 52 to be used for other turbines in the array. This allows for the RPM of an individual turbine generator to be easily monitored. Monitoring the RPM of a turbine can provide an indication as to the general operation of the turbine, e.g. the existence of a fault at the turbine generator preventing the turbine from rotating as fast as it should.

Alternatively, the low-frequency AC signal may be transmitted over a dedicated control wire 50 embedded in the power cable 52.

In the embodiments described above, an electrical braking system 30 for a single turbine generator 10 has been described, the operation of the system 30 being controlled by a single control signal, provided by a single control wire 50. However, it will be understood that in cases where an array of turbine generators 10 are provided, the control scheme may be altered depending on the requirements. For example, the electrical braking systems 30 for each turbine generator 10 in the array may be controlled by the same control signal, allowing for a simultaneous braking of all turbines in the array. Alternatively, a separate control wire 50 may be provided for the electrical braking system 30 of each turbine generator 10. Combined with suitable blocking diodes, or by virtue of the blocking functionality provided by rectifiers, this would allow for the selective braking of individual turbines in the array, without applying a brake to any other turbines.

When a braking operation is desired, the electrical braking system 30 is operable to cut supply to the coil of the reed relay 40, as described above. It will be understood that this variation of the control signal may be generated remotely, e.g. through variation of the DC supply from the on-shore substation, or it may be generated locally, i.e. at the generator 10 itself, e.g. via a Programmable Logic Controller (PLC) or a protection relay working on predefined settings, and capable of receiving commands via a fiber optic transmission line, and deriving energy from an onboard battery.

It will be understood that alternatives to thyristor 38 may be used, for example a TRIode for Alternating Current (TRIAC), a transistor, or a contactor.

The embodiments above show the electrical brake applied to the AC terminals of the turbine generator 10. Alternatively, the electrical brake may be applied across the DC terminals 36 of the generator 10. If the electrical brake is applied across the DC terminals 36 of the generator 10, the short circuit will also connect both poles of the generator 10 to earth, thus providing an electrically isolated system, which is safe to operate on, e.g. for maintenance purposes.

In a further embodiment, a secondary switching element may be provided at a remote location, e.g. at the on-shore substation. The secondary switching element may be operable to apply a short across the DC voltage output received through the power cable 52. In this case, the resistance of the power cable 52 acts as a braking resistor to slow down the motion of the turbine. The primary advantage of this configuration is that braking operations can be remotely enacted without sending any control signals off-shore, and without relying on any components that cannot be immediately accessed without considerable effort, e.g. if there is a failure in some of the components of the electrical braking system 30 which are housed at the turbine generator 10.

The invention is not limited to the embodiments described herein but can be amended or modified without departing from the scope of the present invention.

## Claims

1. An electrical braking system for an off-shore hydroelectric turbine generator, the turbine generator comprising a direct-drive shaftless permanent magnet generator having a plurality of conductive coils and a plurality of magnets, the permanent magnet generator allowing for relative motion between said plurality of coils and said plurality of magnets, inducing an electromotive force in said plurality of coils, wherein

   the electrical braking system, responsive to a control signal, is operable to apply a short circuit across at least one of said plurality of coils, such that a current is induced in said at least one coil and an electrical load is applied to said permanent magnet generator, resulting in a braking torque being applied to the hydroelectric turbine generator.

2. The electrical braking system of claim 1, wherein at least one of the plurality of conductive coils of the permanent magnet generator is formed by a conductor comprising a plurality of parallel wires, and wherein

   the electrical braking system is operable to apply said short circuit across at least one of said plurality of parallel wires.

3. The electrical braking system of claim 2, wherein the number of said plurality of wires across which said short circuit is applied is chosen such that the braking torque generated by said permanent magnet generator exceeds the turbine torque of the turbine generator.

4. The electrical braking system as claimed in claim 1, 2 or 3, wherein the electrical braking system comprises a contactor adapted to be connected across the output terminals of an off-shore hydroelectric turbine generator, and wherein said contactor is controlled by a control signal.

5. The electrical braking system as claimed in any preceding claim, wherein the electrical braking system comprises an electrical switching device and an actuator circuit to actuate said electrical switching device, wherein said actuator circuit is controlled by a control signal.

6. The electrical braking system of claim 5, wherein the electrical braking system comprises a rectifier circuit, said electrical switching device being located across the rectified output of the rectifier circuit, wherein the input of the rectifier circuit is adapted to be connected across the terminals of at least one of said plurality of conductive coils.

7. The electrical braking system of claim 5, wherein said electrical switching device comprises a TRIAC.

8. The electrical braking system of claim 5 or 6, wherein said electrical switching device is chosen from one of the following: a transistor; or a thyristor.

9. The electrical braking system of any one of claims 5-8, wherein said actuator circuit comprises a reed relay having a coil, the coil of the reed relay connected to said control signal, wherein said actuator circuit is operable to actuate said electrical switching device if supply to said coil is removed.

10. A hydroelectric generator system having fault isolation, the system comprising:

    at least one off-shore hydroelectric turbine generator comprising a direct-drive shaftless permanent magnet generator having a plurality of conductive coils and a plurality of magnets, the permanent magnet generator allowing for relative motion between said plurality of coils and said plurality of magnets, inducing an electromotive force in said plurality of coils, the off-shore hydroelectric turbine generator further comprising an electrical braking system as claimed in any preceding claim; and

a power cable adapted to connect the output of said at least one off-shore hydroelectric turbine generator with an on-shore power substation; wherein

the system further comprises at least one control wire, said control wire embedded in said power cable, said control wire adapted to transmit a control signal from said on-shore power substation to the electrical braking system of said at least one off-shore hydroelectric turbine generator, wherein said control signal is operable to actuate said electrical braking system to apply an electrical brake to said off-shore hydroelectric turbine generator.

**11.** The hydroelectric generator system of claim 10, wherein the off-shore hydroelectric turbine generator further comprises a power line transmission module, said power line transmission module operable to impress a modulated carrier signal on said at least one control wire, for transmission of data to said on-shore power substation.

**12.** The hydroelectric generator system of claim 11, wherein the power line transmission module is operable to impress a low-frequency AC signal derived from at least one of said plurality of conductive coils onto said at least one control wire, said low-frequency AC signal representative of the RPM of the turbine generator.

**13.** The hydroelectric generator system of any one of claims 10-12, wherein the system comprises an array of a plurality of said off-shore hydroelectric turbine generators and a plurality of control wires, and wherein the electrical braking system of each off-shore hydroelectric turbine generator is coupled with a dedicated control wire of said plurality of control wires, wherein the hydroelectric generator system is operable to apply an electrical brake to a subset of said plurality of off-shore hydroelectric turbine generators.

**14.** The hydroelectric generator system of any one of claims 10-13, wherein said at least one control wire is implemented as a single-wire earth return circuit, wherein seawater at said off-shore hydroelectric turbine generator is used as a return path for current.

**15.** The hydroelectric generator system of any one of claims 10-14, wherein the system further comprises a secondary switching element, the secondary switching element located at an on-shore substation, wherein the secondary switching element is operable to apply a short circuit across the output of the power cable, wherein the resistance of the power cable acts as a braking resistor, and wherein a current is induced in said plurality of conductive coils and an electrical load is applied to said permanent magnet generator, resulting in a braking torque being applied to the hydroelectric turbine generator.

Fig. 1
(Prior Art)

Fig. 2

Fig. 3

Braking Performance

Fig. 4

EP 2 200 170 A1

Fig. 5

**Braking Performance**

Fig. 6

Fig. 8

Inductive
reactance
$X = p\omega L$

Coil resistance
$r$

Induced EMF
$E = k\omega$

Load resistance
$R$
(= 0 for short circuit)

Fig. 7

Fig. 9

Europäisches
Patentamt

European
Patent Office

Office européen
des brevets

## EUROPEAN SEARCH REPORT

Application Number

EP 08 02 2105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2008/006614 A (OPENHYDRO GROUP LTD [IE]; SPOONER ED [GB]) 17 January 2008 (2008-01-17) * page 12, line 18 - line 19; figure 1 * * page 5, line 30 - line 31; figure 2 * * page 13, line 2 - line 3; figure 7 * ----- | 1-15 | INV. H02P3/22 H02P9/08 F03B13/08 |
| Y | US 2007/291426 A1 (KASUNICH JOHN M [US] ET AL) 20 December 2007 (2007-12-20) * paragraph [0004]; figure 4 * * paragraph [0036] * | 1,4-6,8 | |
| Y | | 3,7,13 | |
| Y | ----- US 2008/012538 A1 (STEWART DAVID B [US] ET AL) 17 January 2008 (2008-01-17) * paragraph [0009]; figure 7 * * paragraph [0049] * ----- | 2 | |
| Y | GB 1 131 352 A (CLEVEDON ELECTRONICS LTD) 23 October 1968 (1968-10-23) * page 2, column 1, line 44 - line 48; figure 1 * ----- | 9 | |
| Y | EP 1 691 377 A (NEXANS [FR]) 16 August 2006 (2006-08-16) * paragraph [0018]; figure 1 * ----- | 10 | TECHNICAL FIELDS SEARCHED (IPC) H02P F03B |
| Y | US 6 476 709 B1 (WUIDART LUC [FR] ET AL) 5 November 2002 (2002-11-05) * column 1, line 6 - line 26; figures 1,2 * ----- | 11,12 | |
| Y | US 2004/227500 A1 (O'MEARA KEVAN T [US]) 18 November 2004 (2004-11-18) * paragraph [0002]; figure 5 * * paragraph [0024] * ----- | 14 | |

-/--

The present search report has been drawn up for all claims

| Place of search | Date of completion of the search | Examiner |
|---|---|---|
| Munich | 25 May 2009 | Schürle, Patrick |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EUROPEAN SEARCH REPORT**

Application Number

EP 08 02 2105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 203 08 901 U1 (TUERK & HILLINGER GMBH [DE]) 14 August 2003 (2003-08-14) * page 1 - page 2; figure 1 * ----- | 15 | |

TECHNICAL FIELDS SEARCHED (IPC)

The present search report has been drawn up for all claims

| Place of search | Date of completion of the search | Examiner |
|---|---|---|
| Munich | 25 May 2009 | Schürle, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 02 2105

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2009

| Patent document cited in search report | | Publication date | Patent family member(s) | | Publication date |
|---|---|---|---|---|---|
| WO 2008006614 | A | 17-01-2008 | AU 2007271907 A1<br>CA 2658203 A1<br>EP 1879280 A1 | | 17-01-2008<br>17-01-2008<br>16-01-2008 |
| US 2007291426 | A1 | 20-12-2007 | NONE | | |
| US 2008012538 | A1 | 17-01-2008 | NONE | | |
| GB 1131352 | A | 23-10-1968 | NONE | | |
| EP 1691377 | A | 16-08-2006 | BR PI0600362 A<br>NO 321088 B1<br>US 2006193572 A1 | | 21-02-2007<br>13-03-2006<br>31-08-2006 |
| US 6476709 | B1 | 05-11-2002 | EP 0967737 A1<br>FR 2780220 A1 | | 29-12-1999<br>24-12-1999 |
| US 2004227500 | A1 | 18-11-2004 | AU 2004240474 A1<br>EP 1623509 A2<br>JP 2007500992 T<br>WO 2004105268 A2 | | 02-12-2004<br>08-02-2006<br>18-01-2007<br>02-12-2004 |
| DE 20308901 | U1 | 14-08-2003 | NONE | | |

EPO FORM P0459

For more details about this annex : see Official Journal of the European Patent Office, No. 12/82

**EP 2 200 170 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2007006258 W